# EUROPÄISCHE PATENTSCHRIFT

(11) **EP 3 582 994 B1**
(45) Veröffentlichungstag und Bekanntmachung des Hinweises auf die Patenterteilung: **04.11.2020**
(21) Anmeldenummer: 18705391.3
(22) Anmeldetag: 14.02.2018
(51) Int. Cl.: H02J 7/00, B60L 53/14, B60L 53/30

(54) **STROMTANKSTELLE FÜR EIN CONTAINERTRANSPORTFAHRZEUG, CONTAINERTRANSPORTFAHRZEUG UND SYSTEM HIERMIT**
ELECTRIC CHARGING STATION FOR A CONTAINER TRANSPORT VEHICLE, CONTAINER TRANSPORT VEHICLE AND SYSTEM WITH THESE
STATION DE CHARGE ÉLECTRIQUE POUR VÉHICULE CONTENEUR DE TRANSPORT, VÉHICULE CONTENEUR DE TRANSPORT ET SYSTÈME

(30) Priorität: 15.02.2017 DE 102017103032
(43) Veröffentlichungstag der Anmeldung: 25.12.2019
(73) Patentinhaber: Konecranes Global Corporation, 05830 Hyvinkää (FI)
(72) Erfinder: WIESCHEMANN, Armin, 46119 Oberhausen (DE); SCHULZ, Heiko, 51381 Leverkusen (DE); SCHMIDT-EWIG, Jan Philipp, 45239 Essen (DE); ALDEJOHANN, Stefan, 40764 Langenfeld (DE); EICHNER, Heinz, 40878 Ratingen (DE)
(74) Vertreter: Moser Götze & Partner Patentanwälte mbB
(86) Internationale Anmeldenummer: PCT/EP2018/053711
(87) Internationale Veröffentlichungsnummer: WO 2018/149886

(56) Entgegenhaltungen:
- WO-A1-2010/142688
- WO-A1-2013/100764
- AT-B1- 507 605
- US-A1- 2013 057 209

## Beschreibung

Die Erfindung betrifft eine Stromtankstelle für ein Containertransportfahrzeug gemäß dem Oberbegriff von Anspruch 1, ein Containertransportfahrzeug gemäß dem Oberbegriff von Anspruch 6 und ein System gemäß dem Oberbegriff von Anspruch 8.

Containertransportfahrzeuge im Sinne der vorliegenden Erfindung sind als Schwerlastfahrzeuge ausgebildete Flurförderfahrzeuge, die für die Handhabung und/oder den Transport von Containern in speziellen Terminals, insbesondere Hafenterminals, ausgelegt sind. Solche Container können insbesondere im Fall von ISO-Containern im beladenen Zustand bis zu 40 t wiegen und normierte oder zumindest standardisierte Längen von zum Beispiel 10, 20, 40, 45, 53 oder 60 Fuß (die beiden letztgenannten Längen werden bisher als nicht ISO genormte Container ausschließlich in Nordamerika eingesetzt) aufweisen. In diesem Zusammenhang werden unter ISO-Containern genormte Großraum- beziehungsweise Seefrachtcontainer verstanden, die im internationalen Warenverkehr zum Einsatz kommen. In den Terminals werden entsprechende Container zwischen mindestens zwei Transportmitteln gleicher oder unterschiedlicher Art umgeschlagen, beispielsweise zwischen Schiffen, Straßen- und/oder Schienenfahrzeugen. In den Terminals kann daher auch ein entsprechend kombinierter Verkehr zwischen Wasser, Straße und/oder Schiene stattfinden. In diesem Zusammenhang können Container auch andere normierte oder zumindest standardisierte Ladungsträger wie beispielsweise Wechselaufbauten, insbesondere Wechselbehälter oder Wechselbrücken, sein.

Derartige Containertransportfahrzeuge sind flurgebundene aber nicht schienengebundene Spezialfahrzeuge, die nur innerbetrieblich innerhalb solcher Terminals betrieben werden und in der Regel nicht für den öffentlichen Verkehr zugelassen sind. Diese internen Containertransportfahrzeuge sind daher strikt vom öffentlichen Verkehr getrennt zu betreiben. Ein möglicher Fahrzeugtyp solcher Containertransportfahrzeuge weist eine von zueinander beabstandeten Führungselementen begrenzte Ladefläche auf. Die Führungselemente werden auch als Einweiser bezeichnet und führen einen aufzunehmenden Container beziehungsweise dessen Eckbeschläge auf die Ladefläche. Hierfür erstrecken sich die Führungselemente mit ihren Führungsflächen schräg nach außen und oben von der Ladefläche weg. Die Ladefläche kann hierbei auch als Teil einer heb- und senkbaren Hubplattform ausgebildet sein. Derartige Containertransportfahrzeuge sind beispielsweise aus der EP 2 637 954 B1 bekannt. Auch eine als Terminal Truck oder Terminal Tractor bezeichnete Zugmaschine kann für sich genommenen oder zusammen mit einem oder mehreren Anhängern als eine Art Sattelzug einen Fahrzeugtyp von Containertransportfahrzeugen im Sinne der vorliegenden Erfindung bilden. Deren Ladefläche und Führungselemente für die Aufnahme der Ladungsträger ist dann jeweils an dem oder den Anhängern vorgesehen. Derartige Containertransportfahrzeuge sind beispielsweise aus DE 10 2012 108 768 A1 bekannt. Auch Portalhubgeräte stellen einen Fahrzeugtyp von Containertransportfahrzeugen im Sinne der vorliegenden Erfindung dar. Dieser Fahrzeugtyp ist beispielsweise in der EP 2 694 424 B1 beschrieben. Derartige Portalhubgeräte, die auch Portalhubstapelwagen, Portalstapelwagen, Straddle Carrier, Van Carrier, Shuttle Carrier oder Runner genannt werden, werden nicht nur für einen Containertransport im Horizontalverkehr, sondern insbesondere auch als spezielle Umschlaggeräte für ISO-Container eingesetzt. Mit Hilfe einer Hubvorrichtung und einem als Spreader bezeichneten Lastaufnahmemittel können Portalhubgeräte Container anheben und nach einem Transport an einem Zielort abstellen. Da die Portalhubgeräte einen spinnenbeinartigen Aufbau aufweisen, können diese einen auf dem Boden oder auf einem anderen Container ruhenden Container überfahren und hierbei zusätzlich je nach Bauweise auch einen angehobenen Container transportieren. Je nach Bauhöhe werden die Portalhubgeräte beispielsweise als 1 über 3-Geräte, 1 über 2- Geräte usw. bezeichnet. Ein 1 über 3-Gerät kann einen Container auf 3 gestapelte Container absetzen, den obersten von 4 gestapelten Containern aufnehmen oder 3 gestapelte Container mit einem aufgenommenen Container überfahren.

Die vorgenannten, innerhalb eines Terminals eingesetzten Containertransportfahrzeuge können manuell geführt werden und dementsprechend insbesondere beim Beschleunigen, Bremsen und Lenken von üblicherweise mitfahrenden Fahrern aktiv gesteuert werden. Hierfür weisen manuell geführte Containertransportfahrzeuge eine entsprechende Fahrzeugsteuerung und üblicherweise auch eine Fahrerkabine auf, aus der zum manuellen Führen ein manuelles Eingreifen in die Fahrzeugsteuerung erfolgen kann. Alternativ können die Containertransportfahrzeuge auch automatisch geführt sein und dementsprechend insbesondere beim Beschleunigen, Bremsen und Lenken im Sinne sogenannter Automated Guided Vehicles (AGV) automatisiert gesteuert werden. Hierfür weisen automatisch geführte Containertransportfahrzeuge eine geeignete Fahrzeugsteuerung auf, so dass aufgrund der hierüber erfolgenden automatischen Steuerung beziehungsweise Navigation kein aktives manuelles Eingreifen eines mitfahrenden Fahrers erforderlich oder möglich ist. In diesem Sinne kann ein automatisch geführtes Containertransportfahrzeug auch bemannt sein, wenn ein Fahrer mitfährt, hierbei jedoch nicht im Sinne eines Fahrzeugführers aktiv in die Steuerung des Containertransportfahrzeugs eingreifen muss oder kann. Fahrerlose, aber von einem Fahrzeugführer manuell ferngesteuerte Containertransportfahrzeuge gelten nicht als automatisch geführte, sondern als manuell geführte Fahrzeuge.

Die WO 2013/050447 A2 beschreibt einen als Stromtankstelle für Containertransportfahrzeuge dienenden Portalkran. Das Laden kann induktiv oder auch kabelgebunden erfolgen.

Die WO 2009/150303 A1 offenbart eine Stromversorgungsstation, zur Versorgung von elektrisch-betriebenen Straddle Carriern oder Terminal Trucks mit Strom.

Auch aus den Dokumenten US 2013/057209 A1, WO 2013/100764 A1, WO 2009/053524 A1, US 2015/0367741 A1, US 7,619,319 B1, WO 2012/011436 A1, WO 2016/203383 A1, US 2011/0055037 A1 und WO 2014/184729 A2 sind Stromtankstellen bekannt. Aus der AT 507 605 B1 ist ein Stromtankstellensystem für Elektrofahrzeuge bekannt, bei dem jeder Fahrer eines Elektrofahrzeugs ein Usermodul verwahren und mitführen muss, um dieses für einen Ladevorgang nach Art einer Dockingstation mit dem Ladegerät der Stromtankstelle zu verbinden.

Aus der EP 2 440 488 B1 beziehungsweise der WO 2010/142688 A1 ist ein entsprechendes Containertransportfahrzeug mit einem batterie-elektrischen Fahrantrieb bekannt, der eine aufladbare Bleibatterie als Traktionsbatterie umfasst. Außerdem ist in diesem Dokument eine Batteriewechselstation beschrieben, in der die Batterie aus dem Containertransportfahrzeug gegen eine bereits aufgeladene Batterie getauscht werden kann. Die Batteriewechselstation hat zugleich eine Lade-und Lagerfunktion, so dass in der Station mehrere ausgetauschte Batterien außerhalb des Containertransportfahrzeugs aufgeladen und bis zum nächsten Batteriewechsel eingelagert werden können.

In der EP 2 694 424 B1 ist beschrieben, dass die Batterie eines Straddle Carriers für einen Ladevorgang außerhalb des Straddle Carriers gegen eine bereits aufgeladene Batterie ausgetauscht werden kann.

Um einen Wechsel von Batterien zu vermeiden und stattdessen die Batterie während des Ladevorgangs im Containertransportfahrzeug belassen zu können, kann in einem Terminal eine Ladestation installiert werden, an der das Containertransportfahrzeug für einen Ladevorgang halten kann. Von dem Hersteller Kalmar wird unter dem Namen "FastCharge" eine Ladestation für Straddle Carrier angeboten (siehe https://www.kalmarglobal.com/fastcharge). Die Ladestation umfasst einen Mast, über den eine Kontaktierungseinheit aufgeständert und beweglich gelagert ist. Die Kontaktierungseinheit wird über ein den Mast hinaufgeführtes Kabel mit elektrischer Energie gespeist. Für einen Ladevorgang hält ein Straddle Carrier im Bereich der Ladestation, so dass die Kontaktierungsmittel von dem Mast weg gerichtet in Richtung eines Oberrahmens des Straddle Carriers bewegt werden können, um für den Ladevorgang mit an dem Oberrahmen angeordneten Kontaktmitteln des Straddle Carriers verbunden werden zu können. Über die mit einer Batterie des Straddle Carriers verbundenen Kontaktmittel wird dann die Batterie an der Ladestation über deren Kontaktierungseinheit geladen.

Der Erfindung liegt die Aufgabe zugrunde, eine verbesserte Stromtankstelle, ein verbessertes Containertransportfahrzeug und ein System hiermit bereit zu stellen, die einen besonders wirtschaftlichen und flexiblen Betrieb ermöglichen.

Diese Aufgabe wird durch eine Stromtankstelle mit den Merkmalen des Anspruchs 1, ein Containertransportfahrzeug mit den Merkmalen des Anspruchs 6 und ein System mit den Merkmalen des Anspruchs 8 gelöst. In den abhängigen Ansprüchen sind vorteilhafte Ausgestaltungen der Erfindung angegeben.

Eine Stromtankstelle für ein Containertransportfahrzeug, wobei die Stromtankstelle ein Ladegerät und eine hiermit verbundene Kontaktierungseinheit umfasst, über die eine Verbindung der Stromtankstelle mit Kontaktmitteln einer aufladbaren Batterie eines Containertransportfahrzeugs für einen Ladevorgang der Batterie herstellbar ist, wobei die Stromtankstelle einschließlich der Kontaktierungseinheit und des Ladegeräts als mobile Einheit ausgebildet ist, wird erfindungsgemäß dadurch verbessert, dass zur Ausbildung der Stromtankstelle als mobile Einheit die Kontaktierungseinheit und das Ladegerät in einem Gehäuse angeordnet sind und das Gehäuse eine Öffnung aufweist, durch die die Kontaktierungseinheit für einen Ladevorgang hindurch aus dem Gehäuse heraus bewegbar ist. Die Zusammenfassung der Stromtankstellenkomponenten zu einer mobilen Einheit bewirkt, dass der Aufstellort einer somit transportabel ausgestalteten Stromtankstelle bei Bedarf einfach geändert werden kann. Die Stromtankstelle kann in diesem Zusammenhang beispielsweise in konstruktiv einfacher Weise auf einem Fahrzeuganhänger angeordnet und hierüber entsprechend verfahren werden. Eine Änderung des Aufstellorts kann beispielsweise bei Umbauarbeiten in einem Terminal oder bei dortigen Flächensanierungen erforderlich werden. Ein weiterer Vorteil ergibt sich daraus, dass die Stromtankstellenkomponenten vor der Anlieferung zu der mobilen Einheit fertig aufgebaut und getestet werden können und dies nach der Anlieferung nicht mehr erforderlich ist. Stattdessen muss nach der Anlieferung nur noch der Anschluss an das örtliche Energieversorgungsnetz erfolgen. Darüber hinaus erfordert der Einsatz eines solchen Stromtankstellen-Moduls nur geringfügige Investitionen in die Infrastruktur am Aufstellort, beispielsweise in einem Hafenterminal. In diesem Zusammenhang ist lediglich eine Anschlussmöglichkeit an das örtliche Energieversorgungsnetz sicherzustellen. Optional kann zusätzlich auch ein Netzwerkanschluss zur Datenübertragung im Rahmen der unten beschriebenen Kommunikation zwischen dem Terminalleitsystem beziehungsweise Flottenleitsystem und der Stromtankstelle vorgesehen werden. Auch im Vergleich zu fest installierten Stromtankstellen im Sinne von Ladestationen ist der Installationsaufwand am Aufstellort geringer. Des Weiteren ist der Infrastrukturaufwand für das Aufstellen einer erfindungsgemäßen mobilen Stromtankstelle auch erheblich geringer als für die Einrichtung der aus dem Stand der Technik bekannten Batteriewechselstation für Bleibatterien. Anders als im genannten Stand der Technik müssen für die erfindungsgemäße Stromtankstelle kein Gebäude, kein Schwerlastregal und auch kein Regalbediengerät für den Austausch der Batterien fest aufgebaut werden. Da bei einem Ausfall des Regalbediengeräts einer Batteriewechselstation sämtliche eingelagerten Batterien nicht zur Verfügung stehen, werden zur Sicherstellung einer ausreichenden Redundanz häufig zwei Batteriewechselstationen aufgebaut. Demgegenüber sind Redundanzen zur Vermeidung eines Betriebsausfalls von Containertransportahrzeugen mit erheblich geringerem Aufwand durch Aufstellen mehrerer erfindungsgemäßer Stromtankstellen erreichbar. Diese Vorteile wirken sich noch stärker aus, wenn die Stromtankstelle zum Laden von Lithium-Ionen-Batterien eingerichtet ist und dementsprechend die Containertransportfahrzeuge mit entsprechend ausgebildeten Batterien ausgestattet sind, um hiervon gespeist zu werden. Dies ergibt sich daraus, dass Lithium-Ionen-Batterien schneller geladen werden können als Bleibatterien und somit die Dauer verkürzt werden kann, in der ein Containertransportfahrzeug aufgrund des Ladevorgangs dem normalen Transportbetrieb entzogen wird und damit einhergehend die Stromtankstelle schneller für das nächste Containertransportfahrzeug zur Verfügung steht.

Die Kontaktierungseinheit kann sich automatisiert an ein im Bereich der Stromtankstelle haltendes Containertransportfahrzeug andocken, um dessen Batterie zu laden. Prinzipiell ist auch durch einen Fahrer ein manuell erfolgendes Bewegen der Kontaktierungseinheit zum Andocken möglich.

In konstruktiv einfacher Weise ist vorgesehen, dass zur Ausbildung der Stromtankstelle als mobile Einheit die Kontaktierungseinheit und das Ladegerät sowie etwaige weitere Komponenten auf einem gemeinsamen Trägerelement angeordnet und dadurch gemeinsam zwischen verschiedenen Aufstellorten transportierbar sind. Das Trägerelement kann beispielsweise von einem Fahrzeuganhänger beziehungsweise dessen Ladefläche gebildet werden.

In erfindungsgemäßer Weise ist vorgesehen, dass zur Ausbildung der Stromtankstelle als mobile Einheit die Kontaktierungseinheit und das Ladegerät in einem Gehäuse angeordnet sind. Vorzugsweise ist das Gehäuse hierbei als Container, insbesondere als ISO-Container, ausgebildet. Die Stromtankstellenkomponenten werden somit durch das ebenfalls als Trägerelement dienende Gehäuse baulich zusammengefasst und sind dadurch besonders einfach handhabbar und besonders kostengünstig an verschiedene Aufstellorte transportierbar. Dies gilt insbesondere im Fall eines ISO-Containers mit normierten Eckbeschlägen, über die auch eine einfache Fixierung während eines Transports sowie am Boden des Aufstellorts möglich ist, indem Arretierungsmittel in Form sogenannter Twistlocks eingreifen. Vorzugsweise werden sämtliche Komponenten vollständig in dem gemeinsamen Gehäuse aufgenommen. Weiterhin vorteilhaft ist zudem, dass die Aufstellung eines Gehäuses, insbesondere eines Containers oder ISO-Containers, kein besonderes Fundament erfordert, sondern nur eine ebene Aufstellfläche ausreicht.

In erfindungsgemäßer Weise ist vorgesehen, dass das Gehäuse eine Öffnung aufweist, durch die die Kontaktierungseinheit für einen Ladevorgang hindurch bewegbar ist. Vorteilhaft ist die Kontaktierungseinheit automatisch durch die Öffnung des Gehäuses hindurch bewegbar. Auch ist die Kontaktierungseinheit umgekehrt durch die Öffnung vollständig in das Gehäuse einziehbar. Dadurch kann die Stromtankstelle sicher passiert werden, ohne dass eine Kollision zwischen einem Containertransportfahrzeug und der Kontaktierungseinheit droht.

In vorteilhafter Weise ist vorgesehen, dass als weitere Komponente ein mit dem Ladegerät verbundener Anschluss zur Verbindung des Ladegeräts mit einem elektrischen Energieversorgungsnetz und/oder eine Steuerungseinheit zur Ansteuerung des Ladegeräts und der Kontaktierungseinheit sowie zur Einbindung in ein Flottenleitsystem vorgesehen ist. Die Verbindung mit dem Energieversorgungsnetz kann wie unten beschrieben auch indirekt über eine Transformatorstation erfolgen.

Ein Containertransportfahrzeug mit einem batterie-elektrischen Fahrantrieb, der eine aufladbare Batterie umfasst, wird dadurch verbessert, dass Kontaktmittel der Batterie und eine Führung, insbesondere in Form eines Trichters, vorgesehen sind und die Kontaktmittel so im Bereich der Führung angeordnet sind, dass für einen Ladevorgang der Batterie eine Kontaktierungseinheit einer Stromtankstelle mittels der Führung zu den Kontaktmitteln führbar ist. Dies ermöglicht ein besonders sicheres und zuverlässiges Andocken der Kontaktierungseinheit an das Containertransportfahrzeug. Vorzugsweise ist hierbei die Batterie eine Lithium-Ionen-Batterie, da diese in vorteilhafter Weise deutlich schneller wieder aufgeladen werden können als Bleibatterien. Dadurch ist es besonders wirtschaftlich, das Laden der Batterien insbesondere automatisiert in den Containertransportfahrzeugen durchzuführen, die währenddessen dem normalen beziehungsweise regulären Transportbetrieb im Terminal nicht zur Verfügung stehen.

In vorteilhafter Weise ist vorgesehen, dass das Containertransportfahrzeug als automatisch geführtes Containertransportfahrzeug ausgebildet ist.

Ein System mit mindestens einer Stromtankstelle für ein Containertransportfahrzeug und mindestens einem Containertransportfahrzeug, wird dadurch verbessert, dass die Stromtankstelle und das Containertransportfahrzeug wie vorliegend beschrieben ausgebildet sind. Ein derartiges System kann in vorteilhafter Weise Teil eines unten näher beschriebenen Terminals, insbesondere eines Terminals zum Umschlag von Ladungsträgern wie beispielsweise ISO-Containern, sein. Anstelle einer Batteriewechselstation werden hier mehrere Stromtankstellen auf beziehungsweise in dem Terminal errichtet. Die Anzahl der Stromtankstellen kann ermittelt werden unter Berücksichtigung der Ladezeit für die Batterien und der Einsatzzeiten zwischen den Ladevorgängen sowie der Anzahl der bei höchster Auslastung eingesetzten Containertransportfahrzeuge. Sofern eine einzelne Stromtankstelle ausfallen sollte oder sich in Wartung befindet, kann die Flotte von Containertransportfahrzeugen über die restlichen Stromtankstellen betrieben werden. Es besteht somit im Vergleich zur Lösung mit einer Batteriewechselstation eine deutlich höhere Redundanz und somit eine höhere Ausfallsicherheit.

In vorteilhafter Weise ist vorgesehen, dass ein Terminal eingerichtet ist, in dem das mindestens eine Containertransportfahrzeug betreibbar ist und in dem mehrere alternative Aufstellorte vorgesehen sind, an denen die mindestens eine Stromtankstelle an ein elektrisches Energieversorgungsnetz des Terminals anschließbar ist.

In konstruktiv einfacher Weise ist vorgesehen, dass das Containertransportfahrzeug und die Stromtankstelle jeweils über eine Kommunikationsverbindung mit einem Leitsystem, insbesondere einem Terminalleitsystem und/oder einem Flottenleitsystem, verbunden sind, um den Betrieb des Containertransportfahrzeugs und der Stromtankstelle zu koordinieren.

Ein Ausführungsbeispiel der Erfindung wird anhand der nachfolgenden Beschreibung näher erläutert. Es zeigen:
Figur 1 eine schematische Ansicht eines Terminals zum Umschlag von Containern mit Containertransportfahrzeugen,
Figur 2 eine Ansicht eines Containertransportfahrzeugs,
Figur 3 eine schematische Ansicht einer erfindungsgemäßen Stromtankstelle mit einem erfindungsgemäßen Containertransportfahrzeug.

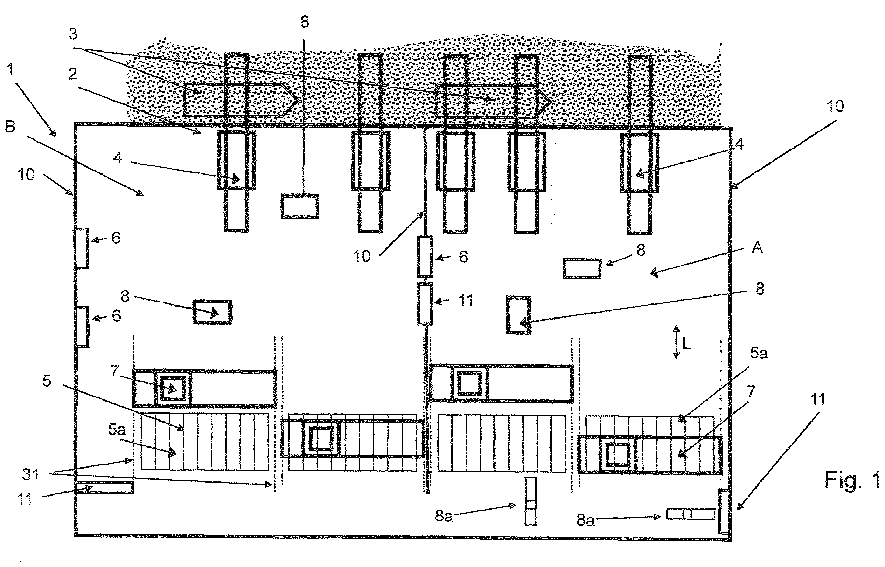

In der Figur 1 ist eine schematische Ansicht eines als Hafenterminal ausgebildeten Terminals 1 zum Umschlag von Containern in der Draufsicht gezeigt. Hierbei können an einem Kai 2 eines Hafens mehrere Schiffe 3 anlegen, um Container anzuliefern oder abzuholen. Für das Beladen beziehungsweise Löschen der Schiffe 3 sind an dem Kai 2 Containerbrücken 4 vorgesehen, die auch als Ship-to-Shore Cranes bezeichnet werden und deren Ausleger sich einerseits über die Schiffe 3 und andererseits über den Kai 2 erstrecken. Alternativ kann das Beladen beziehungsweise Löschen der Schiffe 3 auch über sogenannte Hafenkrane erfolgen, deren Ausleger hierbei um eine vertikale Achse über das entsprechende Schiff 3 verschwenkt wird. Sowohl die Containerbrücken 4 als auch die Hafenkrane stellen sogenannte Umschlaggeräte dar.

Das Terminal 1 ist von einer beispielsweise als Zaun oder Mauer ausgebildeten Begrenzung 10 umgeben und hierüber von seiner äußeren Umgebung und vom öffentlichen Verkehr außerhalb des Containerterminals 1 getrennt. Zudem umfasst das Terminal 1 innerhalb der Begrenzung 10 ein Containerlager 5, in dem Container zur kurzzeitigen Zwischenlagerung in mindestens einem auch als Stack bezeichneten Lagerbereich 5a gestapelt werden können, nachdem sie von den Schiffen 3 abgeladen wurden und bevor sie für den weiteren Transport auf ein Straßen- oder Schienenfahrzeug geladen oder nachdem sie hiervon angeliefert wurden und bevor sie auf die Schiffe 3 geladen werden. Hierbei sind vorzugsweise mehrere Lagerbereiche 5a in einer reihenförmigen und/oder rasterförmigen Anordnung vorgesehen. Zum Bewirtschaften des Containerlagers 5, das heißt zum Ein- und Auslagern der Container in dem Containerlager 5 beziehungsweise dessen Lagerbereichen 5a, ist für sämtliche der quer zur Längsrichtung L benachbarten Lagerbereiche 5a mindestens ein Stapelkran 7 vorgesehen. In jedem Lagerbereich 5a können mittels des zugehörigen Stapelkrans 7 mehrere Reihen von Containern mit ihren Längsseiten nebeneinander und je Reihe mehrere Container übereinander abgestellt werden. Jeder Stapelkran 7 ist hierfür vorzugsweise als Portalkran ausgebildet und weist ein als Spreaderrahmen ausgebildetes Lastaufnahmemittel für die Container auf. Für das Ein- und Auslagern von Containern kann der Stapelkran 7 in Längsrichtung L entlang des zugehörigen Lagerbereichs 5a über die darin gestapelten Container hinweg verfahren werden. Derartige Stapelkrane 7 stellen ebenfalls Umschlaggeräte dar und sind im Ausführungsbeispiel gemäß Figur 1 als automatisierte und schienengebundene Stapelkrane ausgebildet, die auch als Automated Stacking Cranes - kurz: ASC - bezeichnet werden. Bei einem solchen ASC-Terminal werden die Container von dem ASC kopfseitig an beiden in Längsrichtung L weisenden Längsenden des zugehörigen Lagerbereichs 5a zum Auslagern abgegeben und zum Einlagern aufgenommen. Zwischen den kopfseitigen Enden verfährt der ASC über ein Paar von Schienenbahnen 31, zwischen denen der jeweilige Lagerbereich 5a angeordnet ist. Bei einem ASC-Terminal wird der bezüglich des Containerlagers 5 wasserseitig beziehungsweise kaiseitig zum Containertransport stattfindende Verkehr interner Fahrzeuge durch das Containerlager 5 von landseitigem Verkehr externer Fahrzeuge getrennt. Dementsprechend ist auch kein Verkehr dieser Fahrzeuge im Bereich der Schienenbahnen zwischen den Lagerbereichen 5a möglich. Unter externen Fahrzeugen werden vorliegend externe Lkw 8a verstanden, die über einen in der Begrenzung 10 eingerichteten Passierbereich 11 in das Terminal 1 hinein und aus diesem heraus fahren, um Container vom Containerlager 5 beziehungsweise dessen Stapelkran 7 für den weiteren Transport im öffentlichen Verkehr abzuholen oder nach einem Transport im öffentlichen Verkehr zur Zwischenlagerung im Containerlager 5 anzuliefern.

Anders als beim vorliegend dargestellten Layout des Terminals 1, ist auch ein um 90 Grad bezüglich des Kais 2 gedrehtes Layout denkbar, bei dem sich dementsprechend insbesondere die Lagerbereiche 5a nicht im Wesentlichen quer und senkrecht, sondern parallel zum Rand des Kais 2 erstrecken. Dies gilt insbesondere, wenn die Stapelkrane 7 als gummibereifte Stapelkrane, die auch als Rubber-Tyred Gantry Crane - kurz: RTG - bezeichnet werden, oder als schienengebundene Stapelkrane, die auch als Rail-Mounted Gantry Crane - kurz: RMG - bezeichnet werden, ausgebildet sind. Derartige Stapelkrane 7 werden üblicherweise von einer in einer Krankabine mitfahrenden Bedienperson manuell geführt beziehungsweise gesteuert. Auch ein zumindest teilweise oder vollständig automatisierter Betrieb derartiger Stapelkrane 7 ist denkbar. Hierbei werden Container nicht kopfseitig, sondern an der Längsseite des Lagerbereichs 5a übergeben und zum Auslagern beziehungsweise Einlagern von dem RMG oder RTG abgegeben beziehungsweise aufgenommen. Hierfür sind unterhalb des Portals des entsprechenden Stapelkrans 7 entsprechende Übergabespuren vorgesehen. Hierbei kann ein Stapelkran 7 auch mehrere in Längsrichtung L benachbarte Lagerbereiche 5a, die in Längsrichtung L gesehen hintereinander angeordnet und jeweils durch eine Quergasse voneinander beabstandet sind, bewirtschaften und hierfür eine oder mehrere Quergassen überfahren. Alternativ kann jedem Lagerbereich 5a ein eigener Stapelkran 7 oder mehrere Stapelkrane 7 zugeordnet sein.

Innerhalb des Terminals 1 werden zum Transport von Containern zwischen dem Containerlager 5 beziehungsweise dessen Umschlaggeräten und den am Kai 2 angeordneten Umschlaggeräten interne Containertransportfahrzeuge 8 mit batterie-elektrischem Fahrantrieb eingesetzt, die im Sinne der obigen Definition automatisch oder manuell geführt sein können. Diese Transporte erfolgen jeweils in einem sogenannten Horizontalverkehr. Sofern in diesem Zusammenhang teilweise oder ausschließlich automatisch geführte Containertransportfahrzeuge 8 eingesetzt werden, ist innerhalb des Terminals 1 ein abgegrenzter separater Betriebsbereich im Sinne eines Automatik-Bereichs A eingerichtet. In dem Automatik-Bereich A dürfen ausschließlich automatisch geführte Containertransportfahrzeuge 8 und keine manuell geführten Containertransportfahrzeuge 8 zwischen den Umschlaggeräten am Kai 2 und dem dem Automatik-Bereich A zugeordneten Teil des Lagers 5 verkehren. Für die manuell geführten Containertransportfahrzeuge 8 ist entsprechender Weise ein Manuell-Bereich B eingerichtet, in dem keine automatisch geführten Containertransportfahrzeuge 8 und auch keine externen Lkw 8a verkehren dürfen. Der an den Manuell-Bereich B angrenzende Automatik-Bereich A kann durch eine innere Begrenzung analog zur Begrenzung 10 in Form eines Zauns oder einer Mauer eingerichtet sein. Die automatisch geführten Containertransportfahrzeuge 8 können nur innerhalb des Automatik-Bereichs A bestimmungsgemäß betrieben werden und diesen nur für Wartungs- oder Reparaturzwecke durch einen inneren Passierbereich analog zum Passierbereich 11 in Richtung des Manuell-Bereichs B verlassen. In diesem Fall verlassen die Containertransportfahrzeuge 8 den Automatik-Bereich A jedoch nicht automatisch geführt, so dass dies nicht als bestimmungsgemäßer Betrieb gilt. Auch Personen dürfen den Automatik-Bereich A im regulären Betrieb nur in Ausnahmefällen beispielsweise für Wartungs- oder Reparaturzwecke betreten. Auch der Manuell-Bereich B ist für berechtigtes Personal nur über mindestens einen entsprechenden Passierbereich 11 innerhalb des Terminals 1 erreichbar und ansonsten von der Begrenzung 10 umgeben. Dadurch wird auch verhindert, dass externe Lkw 8a in den Manuell-Bereich B einfahren. Manuell geführte Containertransportfahrzeuge 8 können den Manuell-Bereich B jedoch verlassen, um eine Anbindung eines innerhalb des Terminals 1 angeordneten Bahnterminals (nicht dargestellt) für einen schienengebundenen Transport von Containern sicherzustellen.

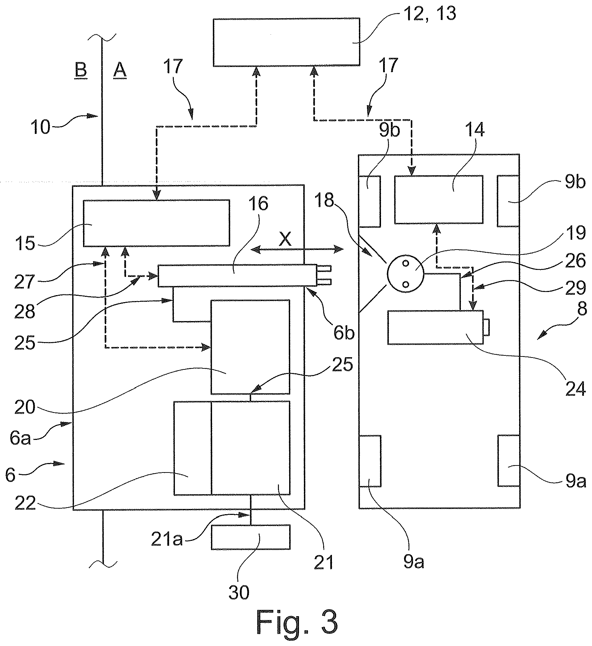

Um den Verkehr innerhalb des Terminals 1 und insbesondere innerhalb des Automatik-Bereichs A beziehungsweise Manuell-Bereichs B zu koordinieren, ist ein rechnergestütztes Terminalleitsystem 13 mit einem Flottenleitsystem 12 vorgesehen (siehe Figur 3). Über das Terminalleitsystem 13 werden Transportaufträge für die Containertransportfahrzeuge 8 geplant, verwaltet und dem Flottenleitsystem 12 übermittelt. Auch kann die Lagerhaltung beziehungsweise Verwaltung des Containerlagers 5 über das Terminalleitsystem 13 erfolgen und in die Planung der Transportaufträge einfließen. Die Transportaufträge werden dann von dem Flottenleitsystem 12 für die Koordinierung des Verkehrs, insbesondere eine hierbei kontinuierlich erfolgende Routenplanung und Routenüberwachung, verwendet. In diesem Zusammenhang werden aus den Transportaufträgen Routen generiert und über drahtlose Kommunikationsverbindungen 17, beispielsweise in Form von WLAN-Verbindungen, an die Containertransportfahrzeuge 8 übermittelt. Die Routen werden bei automatisch geführten Containertransportfahrzeugen 8 von der Fahrzeugsteuerung 14 automatisch in entsprechende Fahrmanöver auf vorgegebenen Fahrspuren umgesetzt. In diesem Zusammenhang werden mittels der Fahrzeugsteuerung 14 Lenkvorgänge und Geschwindigkeiten sowie Beschleunigungen des Containertransportfahrzeugs 8 automatisch gesteuert. Bei manuell geführten Containertransportfahrzeugen 8 können die Fahrer über ein Fahrerinformationssystem des Containertransportfahrzeugs 8 und auf Basis der Routen Fahranweisungen erhalten, die von dem Fahrer durch manuelles Eingreifen in die Fahrzeugsteuerung 14 in entsprechende Fahrmanöver umgesetzt werden müssen. Zur Koordinierung des Verkehrs beziehungsweise der Routenplanung und Routenüberwachung erfolgt durch das Flottenleitsystem 12 eine kontinuierliche Verarbeitung der zeitlich veränderlichen Positionen der im Automatik-Bereich A beziehungsweise Manuell-Bereich B des Terminals 1 befindlichen Containertransportfahrzeuge 8 und weiterer Betriebsinformationen wie beispielsweise die jeweils genutzten Fahrbereiche, Fahrspuren und Fahrtrichtungen der Containertransportfahrzeuge 8 sowie Fahrgeschwindigkeiten und Verkehrsregeln. Auch eine Vorgabe und Änderung von Routen kann hierbei über das Flottenleitsystem 12 und die Kommunikationsverbindungen 17 erfolgen, beispielsweise durch für bestimmte Zeitpunkte vorgegebene Zielpositionen zu nutzende Lagergassen, Fahrspuren und/oder Fahrtrichtungen. Zudem kann das Flottenleitsystem 12 dynamisch Bereiche, insbesondere einzelne Lagergassen beziehungsweise Fahrspuren im Sinne von Sperrbereichen blockieren oder freigeben und somit sicherstellen, dass sich in einem vorgegebenen Bereich nur ein Containertransportfahrzeug 8 befindet.

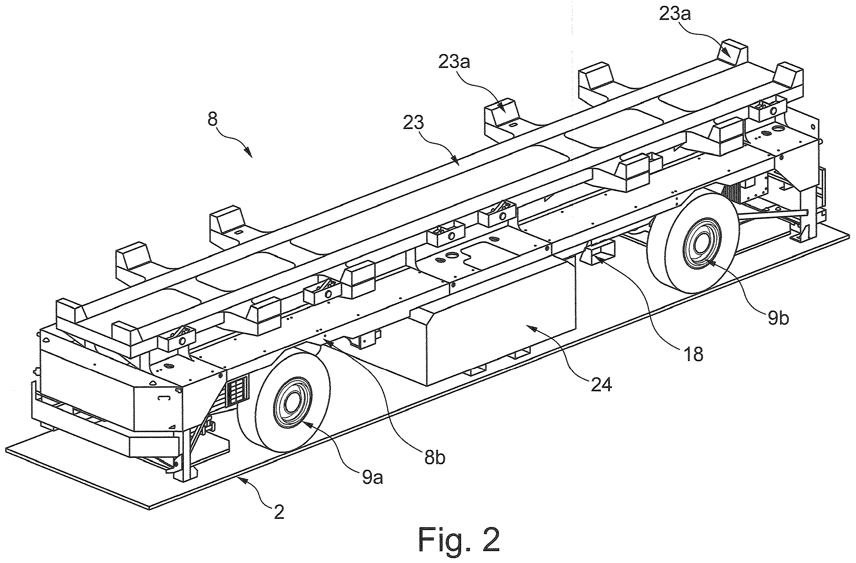

Die Figur 2 zeigt eine schematische Ansicht eines Containertransportfahrzeugs 8 gemäß einem beispielhaften Fahrzeugtyp. Das Containertransportfahrzeug 8 hat ein Leergewicht von etwa 35 Tonnen. Hinzu kommt noch das Gewicht des oder der zu transportierenden ISO-Container, so dass im Beladungszustand ein Gesamtgewicht von etwa 100 Tonnen erreicht werden kann. Das Containertransportfahrzeug 8 weist einen Fahrzeugrahmen 8b auf, an dem auf einer gemeinsamen Vorderachse zwei vordere Räder 9a und auf einer gemeinsamen Hinterachse zwei hintere Räder 9b gelagert sind. Über die Räder 9a, 9b ist das Containertransportfahrzeug 8 frei auf dem Kai 2 und damit flurgebunden, jedoch nicht schienengebunden verfahrbar. Dementsprechend sind derartige Containertransportfahrzeuge 8 von Schienenfahrzeugen und insbesondere von Eisenbahnwagons zu unterscheiden. Die Räder 9 der Containertransportfahrzeuge 8 sind jeweils mit einer Bereifung versehen, die vorzugsweise eine mit Luft befüllte Gummibereifung im Sinne von Pneus ist. Wenn das Containertransportfahrzeug 8 nicht wie in Figur 2 automatisch geführt, sondern manuell geführt ist, ist außerdem eine Fahrerkabine vorgesehen. Auch automatisch geführte Containertransportfahrzeuge 8 können eine Fahrerkabine aufweisen, falls ein Wechsel zwischen automatischem und manuellem Betrieb vorgesehen ist. In diesem Fall kann ein Containertransportfahrzeug 8 auch im oben definierten Sinne automatisch geführt und bemannt im Automatik-Bereich A betrieben werden, wobei die mitfahrende Person innerhalb des Automatik-Bereichs A nicht in die Fahrzeugsteuerung 14 eingreifen muss beziehungsweise kann.

An einer Oberseite des Fahrzeugrahmens 8b befindet sich eine vorzugsweise ebene Ladefläche 23, die zur Aufnahme der zu transportierenden und nicht dargestellten ISO-Container dient. Die Größe der Ladefläche ist so gewählt, dass in einer Längsrichtung L des Containertransportfahrzeugs 8 gesehen zwei 20-Fuß-Container hintereinander oder ein 40-Fuß-Container beziehungsweise 45-Fuß-Container transportierbar sind. Die Ladefläche 23 kann passiv im Sinne von starr mit dem Fahrzeugrahmen 8b verbunden ausgebildet sein oder aktiv sein. In diesem Zusammenhang wird unter aktiv verstanden, dass die Ladefläche als Teil einer Hubplattform in einer vertikalen Richtung und relativ zu dem Fahrzeugrahmen 8b heb-und senkbar ist, um aktiv Container aufzunehmen oder abzustellen. Auch kann die Ladefläche 23 geteilt sein, um jeweils einen 20-Fuß-Container heben und senken zu können.

Dargestellt sind außerdem die eingangs bereits erwähnten Führungselemente 23a, die bei dem beispielhaft dargestellten Fahrzeugtyp vorgesehen sind, um einen zu transportierenden Container 2 und im Fall von ISO-Containern insbesondere dessen Eckbeschläge beim Absetzen auf der Ladefläche 23 führen und in Bezug auf die Ladefläche 23 ausrichten zu können. Hierfür wird die Ladefläche 23 an ihren Seiten von mehreren Führungselementen 23a begrenzt. Die Führungselemente 23a weisen Führungsflächen mit einem schrägen Verlauf auf. Hierbei erstrecken sich die Führungsflächen von der Ladefläche 23 nach oben und außen weg gerichtet und zu der Ladefläche 23 nach unten und innen hin gerichtet. Vorzugsweise sind die Führungselemente 23a paarweise an gegenüberliegenden Seiten, insbesondere Längsseiten und/oder Schmalseiten, der Ladefläche 23 angeordnet. Die Führungsflächen eines Paars von Führungselementen 23a bilden eine Art Trichter, deren schräger Verlauf sich zur Ladefläche 23 hin verjüngt, um die Führungs- und Ausrichtfunktion zu realisieren. Dementsprechend erweitern sich die Führungsflächen eines Paars von Führungselementen 23a von der Ladefläche 23 nach oben weggerichtet. Außerdem weisen die Containertransportfahrzeuge 8 jeweils einen batterie-elektrischen Fahrantrieb mit einem als Elektromotor ausgebildeten Antriebsmotor und einem Getriebe auf, um hierüber die Räder 9a, 9b anzutreiben. Der Fahrantrieb umfasst eine wiederaufladbare Batterie 24 im Sinne eines Akkumulators, die vorzugsweise als Lithium-Ionen-Batterie ausgebildet ist. Die Batterie 24 ist unterhalb des Fahrzeugrahmens 8b an diesem aufgehängt. Typische Energieinhalte der Batterie 24 können beispielsweise zwischen 100 und 300 kWh liegen und typische Spannungsbereiche beispielsweise zwischen 400 und 1000V.

Die Figur 3 zeigt eine schematische Ansicht einer erfindungsgemäß als mobile Einheit ausgebildeten Stromtankstelle 6 mit einem erfindungsgemäßen Containertransportfahrzeug 8 in dem Terminal 1. Die Stromtankstelle 6 umfasst als wesentliche Komponenten ein Ladegerät 20 und eine hiermit über eine elektrische Leitung 25 verbundene Kontaktierungseinheit 16. Über die elektrisch leitende Kontakte aufweisende Kontaktierungseinheit 16 kann eine elektrische Verbindung mit Kontaktmitteln 19 der als Traktionsbatterie dienenden aufladbaren Batterie 24 eines Containertransportfahrzeugs 8 für einen Ladevorgang der Batterie 24 hergestellt werden. Hierfür ist die Kontaktierungseinheit 16 in Ein- und Ausfahrrichtung X beweglich gelagert. Der Ladevorgang wird über das Ladegerät 20 gesteuert, das hierfür einen Stromrichter, insbesondere in Form eines Ladeumrichters, Drosseln und Kondensatoren, Netzfilter und Sicherungen sowie die zur Ansteuerung erforderlichen Komponenten umfasst. Die Ansteuerung erfolgt hierbei beispielsweise über eine speicherprogrammierbare Steuerung - kurz SPS -. Diesbezüglich ist auch die englische Bezeichnung Programmable Logic Controller - kurz: PLC - üblich. Mittels der SPS wird die Kommunikation zwischen Ladegerät 20 und Batterie 24 hergestellt beziehungsweise auf Basis der Kommunikation wird das Ladegerät 20 angesteuert. Anstelle einer SPS kann auch ein Industrie-PC verwendet werden. Gemeinsam mit der gesamten Kontaktierungseinheit 16 und dem Ladegerät 20 ist die Stromtankstelle 6 als mobile Einheit ausgebildet. Die Ladeleistung der Stromtankstelle 6 kann je nach Anschlussleistung und Batteriegröße beispielsweise zwischen 50 und 500kW betragen.

Als weitere Komponente umfasst die als mobile Einheit ausgebildete Stromtankstelle 6 neben der Kontaktierungseinheit 16 auch einen mit dem Ladegerät 20 über eine elektrische Anschlussleitung 21a verbundenen Anschluss 21, eine Steuerungseinheit 15 und eine Unterverteilungseinheit 22. Mittels des Anschlusses 21 kann die Stromtankstelle 6 beziehungsweise das Ladegerät 20 mit einem elektrischen Energieversorgungsnetz 30 des Terminals 1 elektrisch verbunden werden, um hieraus die für die Ladevorgänge der Batterien 24 benötigte elektrische Energie einzuspeisen. Die Verbindung mit dem Energieversorgungsnetz 30 kann auch indirekt über eine Transformatorstation eingerichtet werden, um die Spannung des Energieversorgungsnetzes 30 von Mittelspannungsebene auf eine niedrigere Spannungsebene herunterzutransformieren. An eine solche Transformatorstation können mehrere Stromtankstellen 6 angeschlossen werden. Mittels der Steuerungseinheit 15 kann die Stromtankstelle 6 in das Terminalleitsystem 13 beziehungsweise das Flottenleitsystem 12 eingebunden werden, indem eine drahtlose Kommunikationsverbindung 17 beispielsweise in Form einer WLAN-Verbindung mit der Steuerungseinheit 15 eingerichtet wird. Über die Kommunikationsverbindung 17 kann die Stromtankstelle 6 und insbesondere die Steuerungseinheit 15 angesteuert werden. Die Steuerungseinheit 15 kann dann wiederum das Ladegerät 20 und die Kontaktierungseinheit 16 ansteuern. Hierfür sind weitere Kommunikationsverbindungen 27 beziehungsweise 28 zwischen der Steuerungseinheit 15 und dem Ladegerät 20 beziehungsweise der Steuerungseinheit 15 und der Kontaktierungseinheit 16 vorgesehen, die drahtlos oder drahtgebunden sein können. Die Kontaktierungseinheit 16 kann auch über das Ladegerät 20 angesteuert werden, wenn zwischen diesen ebenfalls eine entsprechende Kommunikationsverbindung eingerichtet ist. Mittels der Unterverteilungseinheit 22 können weitere Verbraucher der Stromtankstelle 6 gespeist werden.

Zur Ausbildung der Stromtankstelle 6 als mobile Einheit sind zumindest die Kontaktierungseinheit 16 und das Ladegerät 20, vorzugsweise jedoch auch die vorgenannten weiteren Komponenten, vollständig in einem transportablen gemeinsamen Gehäuse 6a angeordnet. Im vorliegenden Beispiel ist das Gehäuse 6a als ISO-Container ausgebildet, in dem sämtliche Komponenten der Stromtankstelle 6 vollständig untergebracht sind. Es werden somit keine funktionalen Elemente der Stromtankstelle 6 außerhalb des ISO-Containers untergebracht. Lediglich der Anschluss 21 kann nach Art einer Steckdose in der Gehäusewand angebracht sein, um mit der Anschlussleitung 21a verbunden zu werden. Alternativ kann der Anschluss 21 auch vollständig innerhalb des Gehäuses 6a angebracht sein, so dass die Anschlussleitung 21a beispielsweise in Form eines Kabels durch die Gehäusewand geführt und mit dem Energieversorgungsnetz 30 beispielsweise über eine Steckverbindung verbunden werden muss. Die Anschlussleitung 21a kann fester Bestandteil der Stromtankstelle 6 sein. Auch eine Steckverbindung mit dem Anschluss 21 ist möglich.

In dem Gehäuse 6a ist zudem eine Öffnung 6b vorgesehen, durch die die Kontaktierungseinheit 16 nach entsprechender Ansteuerung für einen Ladevorgang, insbesondere automatisch, mittels eines geeigneten Antriebs hindurch bewegbar ist. Dadurch kann die Kontaktierungseinheit 16 automatisiert an ein im Bereich der Stromtankstelle 6 haltendes Containertransportfahrzeug 8 beziehungsweise dessen mit der Batterie 24 über eine Batterieleitung 26 verbundene Kontaktmittel 19 für den Ladevorgang andocken und die elektrische Verbindung für den Ladevorgang herstellen. Die Verbindung kann nach Art einer Stecker-Steckdose-Verbindung ausgestaltet sein, wobei die Kontaktierungseinheit 16 dem Stecker und die Kontaktmittel 19 der Steckdose entspricht. Ein zuverlässiges Andocken wird dadurch sichergestellt, dass an dem Containertransportfahrzeug 8, insbesondere an dessen Längsseite und vorzugsweise an dessen Fahrzeugrahmen 8b, eine Führung in Form eines Trichters 18 angeordnet ist (siehe auch Figur 2). Die Kontaktmittel 19 sind so im Bereich der Führung angeordnet, dass die Kontaktierungseinheit 16 für einen Ladevorgang der Batterie 24 mittels der Führung eingefangen und zu den Kontaktmitteln 19 geführt werden kann. Hierfür ist der Trichter 18 mit seiner breiteren und als eine Art Fangvorrichtung für die Kontaktierungseinheit 16 dienenden Öffnung von der Fahrzeugmitte weggerichtet angeordnet. Die schmalere Öffnung des Trichters 18 ist dementsprechend der Fahrzeugmitte zugewandt und die Kontaktmittel 19 sind im Bereich der schmaleren Öffnung angeordnet. Durch eine derartige Führung sind Toleranzen in der Positionierung des Containertransportfahrzeugs 8 vor der Stromtankstelle 6, insbesondere in Längsrichtung sowie in der Höhe des Containertransportfahrzeugs 8, möglich und ausgleichbar. Die bewegliche Kontaktierungseinheit 16 ist hierfür entsprechend flexibel und/oder schwenkbar ausgebildet beziehungsweise gelagert. In der Fahrzeugquerrichtung erfolgt der Toleranzausgleich über die Kontaktierungseinheit 16 selbst, indem diese unterschiedlich weit in Ein- und Ausfahrrichtung X bewegt werden kann. Nach dem Andocken über die Kontaktierungseinheit 16 startet das Ladegerät 20 den Ladevorgang für die im Containertransportfahrzeug 8 verbleibende Batterie 24. Nach Beendigung des Ladevorgangs dockt die Kontaktierungseinheit 16 wieder von dem Containertransportfahrzeug 8 ab und wird in den ISO-Container zurückbewegt.

Über die Kommunikationsverbindungen 17 und das Terminalleitsystem 13 beziehungsweise Flottenleitsystem 12 findet eine vorzugsweise kontinuierliche Kommunikation zwischen der Fahrzeugsteuerung 14 und der Steuerungseinheit 15 statt. Dadurch kann die über eine Kommunikationsverbindung 29 mit der Batterie 24 verbundene Fahrzeugsteuerung 14 im Sinne eines Batteriemanagementsystems den Ladezustand der Batterie 24 überwachen und bei Absinken auf einen definierten Ladezustand einen Ladevorgang vorbereiten beziehungsweise initiieren. Bei automatisch geführten Containertransportfahrzeugen 8 meldet die Fahrzeugsteuerung 14 das Containertransportfahrzeug 8 über die Kommunikationsverbindung 17 für einen Ladevorgang an und erhält die für ein automatisch geführtes Anfahren einer freien Stromtankstelle 6 erforderlichen Informationen, insbesondere eine entsprechende Route. Bei manuell geführten Containertransportfahrzeugen 8 wird der Fahrer über das Fahrerinformationssystem entsprechend informiert und zum Anfahren einer freien Stromtankstelle 6 über eine entsprechend vorgegebene Route aufgefordert. Insbesondere bei kleineren Flotten von Containertransportfahrzeugen 8 ohne Terminalleitsystem 13 beziehungsweise Flottenleitsystem 12 kann alternativ auch der von einer Anzeige angezeigte Ladezustand der Batterie 24 durch den Fahrer überwacht werden und bei Bedarf ohne vorgegebene Route eine freie Stromtankstelle 6 angefahren werden. Zugleich wird das entsprechende Containertransportfahrzeug 8 bis zum Abschluss des Ladevorgangs nicht mehr für Transportaufträge berücksichtigt, nimmt also bis zum Abschluss des Ladevorgangs nicht am normalen Transportbetrieb teil. Im Rahmen der vorzugsweise kontinuierlichen Kommunikation kann auch vorgesehen sein, dass die für den Ladevorgang erforderliche Positionierung des Containertransportfahrzeugs 8 an der Stromtankstelle 6 erkannt und dadurch das Andocken beziehungsweise Ausfahren der Kontaktierungseinheit 16 und der anschließende Start des Ladevorgangs veranlasst wird. Der Abschluss des Ladevorgangs kann beispielsweise von der Steuerungseinheit 15 und/oder der Fahrzeugsteuerung 14 an das Terminalleitsystem 13 beziehungsweise das Flottenleitsystem 12 gemeldet werden. Damit ist die Stromtankstelle 6 für einen neuen Ladevorgang verfügbar und das Containertransportfahrzeug 8 steht wieder dem regulären Transportbetrieb für Transportaufträge im Terminal 1 zur Verfügung. Das Terminalleitsystem 13 beziehungsweise das Flottenleitsystem 12 kann wie zuvor beschrieben Batterieladeaufträge oder auch Wartungsaufträge verwalten beziehungsweise koordinieren. Hierfür ist vorzugsweise jede von üblicherweise mehreren im Terminal 1 vorgesehenen Stromtankstellen 6 entsprechend eingebunden.

Um die im Automatik-Bereich A bereitgestellten Stromtankstellen 6 auch von außerhalb des Automatik-Bereichs A betreten zu können, werden diese wie in den Figuren 1 und 3 dargestellt in die Begrenzung 10, beispielsweise einen entsprechend dimensionierten Zaundurchbruch, eingesetzt. Bei einer derartigen Anordnung ist die Stromtankstelle 6 für Wartungspersonal auch vom Manuell-Bereich B und somit von außerhalb des Automatik-Bereichs A erreichbar. Insbesondere das Gehäuse 6a kann hierbei durch eine außerhalb des Automatik-Bereichs A angeordnete Tür vom Manuell-Bereich B aus betreten werden. Eine Unterbrechung des regulären Betriebs oder eine Gefährdung von Personen im Automatik-Bereich A kann somit vermieden werden. Grundsätzlich können die Stromtankstellen 6 allerdings sowohl innerhalb des Automatik-Bereichs A als auch innerhalb des Manuell-Bereichs B an geeigneten und von den Containertransportfahrzeugen 8 erreichbaren Aufstellorten mit oder ohne Abstand von der Begrenzung 10 abgestellt und betrieben werden.

Um die Stromtankstelle 6 erfindungsgemäß als mobile Einheit auszubilden, müssen deren oben genannte Komponenten nicht in einem ISO-Container untergebracht sein. Alternativ ist auch eine Unterbringung in einem Gehäuse 6a denkbar, das als nicht normierter Container oder anderes geeignetes transportables Großraumbehältnis mit entsprechender Öffnung 6b ausgebildet ist. Auch eine Anordnung der Stromtankstelle 6 und zumindest der Kontaktierungseinheit 22 sowie des Ladegeräts auf einem über Räder verfahrbaren Fahrzeuganhänger stellt eine als mobile Einheit ausgebildete Stromtankstelle dar. Hierfür ist kein gemeinsames Gehäuse 6a für die genannten Komponenten der Stromtankstelle 6 erforderlich. Der Fahrzeuganhänger beziehungsweise dessen Ladefläche stellt ebenso wie ein Gehäuse 6a ein gemeinsames Trägerelement dar, auf dem zumindest die Kontaktierungseinheit 16 und das Ladegerät 20 sowie gegebenenfalls die etwaigen weiteren Komponenten zur Ausbildung der Stromtankstelle 6 als mobile Einheit angeordnet werden können, um die Stromtankstelle 6 als mobile Einheit auszubilden und diese dadurch auf einfache Weise zwischen verschiedenen Aufstellorten transportieren und aufstellen zu können. Dies ermöglicht eine besonders flexible Positionierung der Stromtankstelle 6 an wechselnden Aufstellorten, sofern sich das Energieversorgungsnetz 30 bis zu dem jeweils gewünschten Aufstellort erstreckt und eine Anschlussmöglichkeit an das Energieversorgungsnetz 30 des Terminals 1 vorhanden ist, um eine Einspeisung über den Anschluss 21 zu ermöglichen.

Die in dem Terminal 1 für den Horizontalverkehr eingesetzte Flotte von Containertransportfahrzeugen 8 kann anstelle des in den Figuren beispielhaft dargestellten Fahrzeugtyps auch Sattelzüge mit einer Zugmaschine in Form eines Terminal Trucks oder Portalhubgeräte im Sinne der obigen Definition umfassen. Auch Schwerlaststapler nach Art sogenannter Reach Stacker stellen einen Fahrzeugtyp von Containertransportfahrzeugen 8 dar. Sowohl entsprechende Portalhubgeräte als auch Schwerlaststapler weisen üblicherweise keine Ladefläche 23 mit Führungselementen 23a zum Abstellen von Containern, sondern einen sogenannten Spreaderrahmen als Lastaufnahmemittel zur Aufnahme von Containern auf. Im Übrigen haben diese Fahrzeugtypen als gemeinsame Merkmale zumindest einen batterie-elektrischen Fahrantrieb und eine Führung für die Kontaktierungseinheit 16 im oben beschriebenen Sinne. Die im Bereich der Führung für die Kontaktierungseinheit 16 angeordneten Kontaktmittel 19 können von der Batterie 24 beabstandet und mit dieser über die elektrische Batterieleitung 26 verbunden sein. Dadurch kann die Batterie 24 selbst im Bereich der Führung oder auch von dieser beabstandet angeordnet sein. Dies gilt insbesondere, wenn die Stromtankstelle 6 von Containertransportfahrzeugen 8 in Form von Portalhubgeräten wie Straddle Carriern für einen Ladevorgang angefahren werden. Hier kann dann die Batterie 24 beispielsweise im Bereich eines Oberrahmens des Portals und somit oberhalb der Kontaktierungseinheit 16 gelagert sein und die Kontaktmittel 19 im Bereich von Fahrwerksträgern des Portalhubgeräts etwa auf Höhe der Kontaktierungseinheit 16 angeordnet sein. Des Weiteren stellt die beschriebene Stromtankstelle 6 eine universell einsetzbare Lösung dar, um die Batterien 24 der Containertransportfahrzeuge 8 des Horizontalverkehrs wieder aufladen zu können. Die Stromtankstelle 6 kann für manuell geführte Containertransportfahrzeuge 8 wie beschrieben automatisiert oder auch in einer manuell bedienbaren Variante ausgebildet sein. Hier ist dann durch einen Fahrer ein manuelles Bewegen der Kontaktierungseinheit 16 zum Andocken an die Kontaktmittel 19 möglich.

Die erfindungsgemäßen Containertransportfahrzeuge 8 und Stromtankstellen 6 können außerdem nicht nur wie vorliegend beschrieben in Bezug auf ein als Hafenterminal ausgebildetes Terminal 1 eingesetzt werden. Dies ist vielmehr auch möglich, wenn ein entsprechendes Terminal 1 Teil eines Logistikzentrums oder eines Industriebetriebs ist, in dessen innerbetrieblicher Logistik Containertransportfahrzeuge 8 beziehungsweise Schwerlastfahrzeuge mit vergleichbarem batterie-elektrischem Fahrantrieb eingesetzt werden. Selbstverständlich können anstelle von Containern, insbesondere ISO-Containern, auch andere normierte oder standardisierte Ladungsträger wie beispielsweise Wechselaufbauten, insbesondere Wechselbehälter oder Wechselbrücken, transportiert und umgeschlagen werden.

### Bezugszeichenliste

- 1: Terminal
- 2: Kai
- 3: Schiff
- 4: Containerbrücke
- 5: Containerlager
- 5a: Lagerbereich
- 6: Stromtankstelle
- 6a: Gehäuse
- 6b: Öffnung
- 7: Stapelkran
- 8: Containertransportfahrzeug
- 8a: Lkw
- 8b: Fahrzeugrahmen
- 9a: vorderes Rad
- 9b: hinteres Rad
- 10: Begrenzung
- 11: Passierbereich
- 12: Flottenleitsystem
- 13: Terminalleitsystem
- 14: Fahrzeugsteuerung
- 15: Steuerungseinheit
- 16: Kontaktierungseinheit
- 17: Kommunikationsverbindung
- 18: Trichter
- 19: Kontaktmittel
- 20: Ladegerät
- 21: Anschluss
- 21a: Anschlussleitung
- 22: Unterverteilung
- 23: Ladefläche
- 23a: Führungselement
- 24: Batterie
- 25: Leitung
- 26: Batterieleitung
- 27: Kommunikationsverbindung
- 28: Kommunikationsverbindung
- 29: Kommunikationsverbindung
- 30: Energieversorgungsnetz
- 31: Schienenbahn
- A: Automatik-Bereich
- B: Manuell-Bereich
- L: Längsrichtung
- X: Ein- und Ausfahrrichtung

## Patentansprüche

1. Stromtankstelle (6) für ein Containertransportfahrzeug (8), wobei die Stromtankstelle (6) ein Ladegerät (20) und eine hiermit verbundene Kontaktierungseinheit (16) umfasst, über die eine Verbindung der Stromtankstelle (6) mit Kontaktmitteln (19) einer aufladbaren Batterie (24) eines Containertransportfahrzeugs (8) für einen Ladevorgang der Batterie (24) herstellbar ist, wobei die Stromtankstelle (6) einschließlich der Kontaktierungseinheit (16) und des Ladegeräts (20) als mobile Einheit ausgebildet ist, **dadurch gekennzeichnet, dass** zur Ausbildung der Stromtankstelle (6) als mobile Einheit die Kontaktierungseinheit (16) und das Ladegerät (20) in einem Gehäuse (6a) angeordnet sind und das Gehäuse (6a) eine Öffnung (6b) aufweist, durch die die Kontaktierungseinheit (16) für einen Ladevorgang hindurch aus dem Gehäuse (6a) heraus bewegbar ist.

2. Stromtankstelle (6) nach Anspruch 1, **dadurch gekennzeichnet, dass** zur Ausbildung der Stromtankstelle (6) als mobile Einheit die Kontaktierungseinheit (16) und das Ladegerät (20) sowie etwaige weitere Komponenten auf einem gemeinsamen Trägerelement angeordnet und dadurch gemeinsam zwischen verschiedenen Aufstellorten transportierbar sind.

3. Stromtankstelle (6) nach Anspruch 1 oder 2, **dadurch gekennzeichnet, dass** das Gehäuse (6a) als Container, insbesondere als ISO-Container, ausgebildet ist.

4. Stromtankstelle (6) nach einem der vorherigen Ansprüche, **dadurch gekennzeichnet, dass** die Kontaktierungseinheit (16) für einen Ladevorgang automatisch durch die Öffnung (6b) des Gehäuses (6a) hindurch bewegbar ist.

5. Stromtankstelle (6) nach einem der vorherigen Ansprüche, **dadurch gekennzeichnet, dass** als weitere Komponente ein mit dem Ladegerät (20) verbundener Anschluss (21) zur Verbindung des Ladegeräts (20) mit einem elektrischen Energieversorgungsnetz (30) und/oder eine Steuerungseinheit (15) zur Ansteuerung des Ladegeräts (20) und der Kontaktierungseinheit (16) sowie zur Einbindung in ein Flottenleitsystem (12) vorgesehen ist.

6. Containertransportfahrzeug (8) mit einem batterie-elektrischen Fahrantrieb, der eine aufladbare Batterie (24) umfasst, **dadurch gekennzeichnet, dass** Kontaktmittel (19) der Batterie (24) und eine Führung, insbesondere in Form eines Trichters (18), vorgesehen sind und die Kontaktmittel (19) so im Bereich der Führung angeordnet sind, dass für einen Ladevorgang der Batterie (24) eine Kontaktierungseinheit (16) einer Stromtankstelle (6) nach einem der Ansprüche 1 bis 5 mittels der Führung zu den Kontaktmitteln (19) führbar ist.

7. Containertransportfahrzeug (8) nach Anspruch 6, **dadurch gekennzeichnet, dass** das Containertransportfahrzeug (8) als automatisch geführtes Containertransportfahrzeug (8) ausgebildet ist.

8. System mit mindestens einer Stromtankstelle (6) für ein Containertransportfahrzeug (8) und mindestens einem Containertransportfahrzeug (8), **dadurch gekennzeichnet, dass** die Stromtankstelle (6) nach einem der Ansprüche 1 bis 5 und das Containertransportfahrzeug (8) nach Anspruch 6 oder 7 ausgebildet ist.

9. System nach Anspruch 8, **dadurch gekennzeichnet, dass** ein Terminal (1) eingerichtet ist, in dem das mindestens eine Containertransportfahrzeug (8) betreibbar ist und in dem mehrere alternative Aufstellorte vorgesehen sind, an denen die mindestens eine Stromtankstelle (6) an ein elektrisches Energieversorgungsnetz (30) des Terminals (1) anschließbar ist.

10. System nach Anspruch 8 oder 9, **dadurch gekennzeichnet, dass** das Containertransportfahrzeug (8) und die Stromtankstelle (6) jeweils über eine Kommunikationsverbindung (17) mit einem Leitsystem, insbesondere einem Terminalleitsystem (13) und/oder einem Flottenleitsystem (12), verbunden sind, um den Betrieb des Containertransportfahrzeugs (8) und der Stromtankstelle (6) zu koordinieren.

## Claims

1. Electric charging station (6) for a container transport vehicle (8), wherein the electric charging station (6) comprises a charging device (20) and a contacting unit (16) which is connected thereto and via which a connection between the electric charging station (6) and contact means (19) of a chargeable battery (24) of a container transport vehicle (8) can be established for a charging procedure of the battery (24), wherein the electric charging station (6) including the contacting unit (16) and the charging device (20) is designed as a mobile unit, **characterised in that**, in order to design the electric charging station (6) as a mobile unit, the contacting unit (16) and the charging device (20) are arranged in a housing (6a) and the housing (6a) has an opening (6b), through which the contacting unit (16) can be moved out of the housing (6a) for a charging procedure.

2. Electric charging station (6) as claimed in claim 1, **characterised in that**, in order to design the electric charging station (6) as a mobile unit, the contacting unit (16) and the charging device (20) and possible further components are arranged on a common carrier element and as a result can be transported together between different installation sites.

3. Electric charging station (6) as claimed in claim 1 or 2, **characterised in that** the housing (6a) is designed as a container, in particular as an ISO container.

4. Electric charging station (6) as claimed in any one of the preceding claims, **characterised in that** the contacting unit (16) can be moved automatically through the opening (6b) of the housing (6a) for a charging procedure.

5. Electric charging station (6) as claimed in any one of the preceding claims, **characterised in that** as a further component a connector (21) is provided which is connected to the charging device (20) for the purpose of connecting the charging device (20) to an electric power supply network (30) and/or a control unit (15) for activating the charging device (20) and the contacting unit (16) and for incorporation into a fleet management system (12).

6. Container transport vehicle (8) comprising a battery-electric travel drive which comprises a chargeable battery (24), **characterised in that** contact means (19) of the battery (24) and a guide, in particular in the form of a funnel (18), are provided and the contact means (19) are arranged in the region of the guide such that, for a charging procedure of the battery (24), a contacting unit (16) of an electric charging station (6) as claimed in any one of claims 1 to 5 can be guided to the contact means (19) by means of the guide.

7. Container transport vehicle (8) as claimed in claim 6, **characterised in that** the container transport vehicle (8) is designed as an automatically guided container transport vehicle (8).

8. System comprising an electric charging station (6) for a container transport vehicle (8) and at least one container transport vehicle (8), **characterised in that** the electric charging station (6) is designed as claimed in any one of claims 1 to 5 and the container transport vehicle (8) is designed as claimed in claim 6 or 7.

9. System as claimed in claim 8, **characterised in that** a terminal (1) is established, in which the at least one container transport vehicle (8) can be operated and in which a plurality of alternative installation sites are provided, at which the at least one electric charging station (6) can be connected to an electric power supply network (30) of the terminal (1).

10. System as claimed in claim 8 or 9, **characterised in that** the container transport vehicle (8) and the electric charging station (6) are each connected via a communication connection (17) to a management system, in particular a terminal management system (13) and/or a fleet management system (12) in order to coordinate the operation of the container transport vehicle (8) and the electric charging station (6).

## Revendications

1. Station de charge électrique (6) destinée à un véhicule de transport de conteneurs (8), la station de charge électrique (6) comprenant un chargeur (20) et une unité de contact (16) qui est reliée à celui-ci et qui permet de relier la station de charge électrique (6) à des moyens de contact (19) d'une batterie rechargeable (24) d'un véhicule de transport de conteneurs (8) afin de charger la batterie (24), la station de charge électrique (6) comprenant l'unité de contact (16) et le chargeur (20) étant conçue comme une unité mobile, **caractérisée en ce que**, pour former la station de charge électrique comme une unité mobile, l'unité de charge (16) et le chargeur (20) sont disposés dans un boîtier (6a) et le boîtier (6a) comporte une ouverture (6b) par laquelle l'unité de contact (16) peut être sortie du boîtier (6a) pour effectuer un processus de charge.

2. Station de charge électrique (6) selon la revendication 1, **caractérisée en ce que**, pour former la station de charge électrique (6) comme une unité mobile, l'unité de contact (16) et le chargeur (20) ainsi que tous les autres composants sont disposés sur un élément de support commun et sont donc transportables conjointement entre différents sites d'installation.

3. Station de charge électrique (6) selon la revendication 1 ou 2, **caractérisée en ce que** le boîtier (6a) est réalisé sous la forme d'un conteneur, notamment sous la forme d'un conteneur ISO.

4. Station de charge électrique (6) selon l'une des revendications précédentes, **caractérisée en ce que** l'unité de contact (16) peut être déplacée automatiquement à travers l'ouverture (6b) du boîtier (6a) pour effectuer un processus de charge.

5. Station de charge électrique (6) selon l'une des revendications précédentes, **caractérisée en ce qu'**il est prévu comme autre composant un raccord (21) qui est relié au chargeur (20) et qui est destiné à relier le chargeur (20) à un réseau d'alimentation électrique (30) et/ou une unité de commande 15) destinée à commander le chargeur (20) et l'unité de contact (16) et à être intégrée dans un système de gestion de flotte (12).

6. Véhicule de transport de conteneurs (8) comprenant un entraînement électrique par batterie qui comprend une batterie rechargeable (24), **caractérisé en ce que** des moyens de contact (19) de la batterie (24) et un guide, se présentant notamment sous la forme d'un entonnoir (18), sont prévus et les moyens de contact (19) sont disposés au niveau du guide de sorte qu'une unité de contact (16) d'une station de charge électrique (6) selon l'une des revendications 1 à 5 peut être guidée vers les moyens de contact (19) à l'aide du guide pour charger la batterie (24).

7. Véhicule de transport de conteneurs (8) selon la revendication 6, **caractérisé en ce que** le véhicule de transport de conteneurs (8) est conçu comme un véhicule de transport de conteneurs (8) à guidage automatique.

8. Système comprenant au moins une station de charge électrique (6) destinée à un véhicule de transport de conteneurs (8) et au moins un véhicule de transport de conteneurs (8), **caractérisé en ce que** la station de charge électrique (6) est conçue selon l'une des revendications 1 à 5 et le véhicule de transport de conteneurs (8) est conçu selon la revendication 6 ou 7.

9. Système selon la revendication 8, **caractérisé en ce qu'**un terminal (1) est prévu dans lequel l'au moins un véhicule de transport de conteneurs (8) peut être utilisé et dans lequel plusieurs sites d'installation alternatifs sont prévus où l'au moins une station de charge électrique (6) peut être raccordée au réseau d'alimentation électrique (30) du terminal (1).

10. Système selon la revendication 8 ou 9, **caractérisé en ce que** le véhicule de transport de conteneurs (8) et la station de charge électrique (6) sont reliés, chacun par le biais d'une liaison de communication (17), à un système de gestion, notamment un système de gestion de terminal (13) et/ou un système de gestion de flotte (12), pour coordonner le fonctionnement du véhicule de transport de conteneurs (8) et de la station de charge électrique (6).
